# EUROPEAN PATENT APPLICATION

(11) **EP 2 571 146 A2**
(43) Date of publication of application: **20.03.2013**
(21) Application number: 12183743.9
(22) Date of filing: 10.09.2012
(51) Int. Cl.: H02K 9/22, H02K 5/20

(54) **Electric machine module cooling system and assembling method**

(30) Priority: 15.09.2011 US 201113233187
(71) Applicant: Remy Technologies, LLC, Pendleton, IN 46064 (US)
(72) Inventor: Hamer, Colin J, Noblesville, IN 46060 (US); Chamberlin, Bradley D., Pendleton, IN 46064 (US); Creviston, Alex S., Muncie, IN 47302 (US)
(74) Representative: Roberts, Peter David

(57) **Abstract**

Embodiments of the invention provide an electric machine module. The module can include a housing, which can define a machine cavity. In some embodiments, a stator assembly can be positioned within the machine cavity. In some embodiments a transfer member can substantially contact at least a portion of the stator end turns. The transfer member can be in thermal communication with some of the stator end turns and a portion of the housing. In some embodiments, the transfer member can include a substantially non-liquid first element and a substantially liquid second element.

## Description

### BACKGROUND

Electric machines, often contained within a machine cavity of a housing, generally include a stator assembly and a rotor assembly. For some electric machines, the stator assembly can be secured to the housing using different coupling techniques to generally secure the electric machine within the housing. During operation of some electric machines, heat energy can by generated by both the stator assembly and the rotor assembly, as well as other components of the electric machine. For some electric machines, the increase in heat energy produced by some elements of the electric machine can lead to inefficient machine operations.

### SUMMARY

Some embodiments of the invention provide an electric machine module. The module can include a housing, which can define a machine cavity. In some embodiments, a stator assembly can be positioned within the machine cavity. In some embodiments, the stator assembly can include stator end turns. In some embodiments, an end turn member can be positioned within the machine cavity and can include a radially inward flange and a radially outward flange axially extending from a generally central region. In some embodiments, the end turn member can be configured and arranged so that the flanges can be substantially adjacent to at least a portion of the stator end turns. In some embodiments, at least a portion of a transfer member can be disposed between the stator assembly and the end turn member. In some embodiments, the transfer member can comprise a first element and a second element.

Some embodiments of the invention provide an electric machine module including a housing. In some embodiments, the housing can at least partially define a machine cavity and can include a coolant jacket. In some embodiments, a stator assembly can be positioned within the machine cavity. In some embodiments, the stator assembly can include stator end turns. In some embodiments, a transfer member can substantially circumscribe at least a portion of the stator end turns and can be in thermal communication with at least a portion of the stator end turns and at least a portion of the housing. In some embodiments, the transfer member can comprise a first element that can be positioned substantially immediately adjacent to at least a portion of the stator end turns. In some embodiments, the transfer member can comprise a second element that can be positioned substantially adjacent to at least a portion of the first element and at least a portion of the stator end turns.

According to an aspect of the invention there is provided an electric machine module comprising a housing at least partially defining a machine cavity, a coolant jacket being at least partially positioned within the housing, a stator assembly being positioned within the machine cavity and being at least partially enclosed within the housing, the stator assembly including a stator core including a first and a second axial end, and stator end turns extending from the first and the second axial ends into the machine cavity, and a transfer member substantially contacting at least a portion of the stator end turns, the transfer member being in thermal communication with at least a portion of the stator end turns and at least a portion of the housing, the transfer member further comprising a first element being positioned immediately adjacent to at least a portion of the stator end turns, the first element comprising a substantially non-liquid composition when the first element is positioned immediately adjacent to at least a portion of the stator end turns, and a second element being positioned substantially adjacent to at least a portion of the first element and at least a portion of the stator end turns, the second element comprising a substantially liquid composition when the second element is positioned substantially adjacent to at least a portion of the first element and at least a portion of the stator end turns.

The first element may comprise at least one of aluminum oxide, aluminum nitride, boron nitride, and beryllium oxide.

The first element may comprise a composition including a thermal conductivity value greater than or equal to 30 Watts per meter Kelvin.

The second element may comprise a resin.

The second element may comprise epoxy.

The electric machine module may further comprise an end turn member being at least partially positioned within the machine cavity and substantially adjacent to at least a portion of the stator end turns.

At least a portion of the transfer member may be in thermal communication with at least a portion of the end turn member.

The electric machine module may further comprise at least one member aperture disposed through a portion of the end turn member.

The transfer member may comprise a composition including a thermal conductivity value greater than or equal to 2 Watts per meter Kelvin.

According to an aspect of the invention there is provided a method of assembling an electric machine module, the method comprising providing an electric machine including a stator assembly, the stator assembly including stator end turns, an inner perimeter, and an outer perimeter, positioning an inner portion of a mold assembly immediately adjacent to the Inner perimeter of the stator assembly, positioning an outer portion of the mold assembly immediately adjacent to the outer perimeter of the stator assembly so that the inner portion, the outer portion, and at least a portion of the stator assembly at least partially define a cavity, wherein at least a portion of the stator end turns extend from stator assembly into the cavity, disposing at least a portion of a first element within the cavity until at least a portion of the stator end turns are substantially surrounded by the first element, dynamically compacting at least a portion of the first element within the cavity, and impregnating at least a portion of the stator assembly and the cavity with a second element so that the second element contacts at least a portion of the first element to form a transfer member.

The first element may comprise a substantially non-liquid composition when disposed within the cavity.

The first element may comprise at least one of aluminum oxide, aluminum nitride, boron nitride, and beryllium oxide.

The impregnating step may comprise vacuum pressure impregnation.

The second element may comprise a resin.

The second element may comprise epoxy.

The method may further comprise positioning an end turn member substantially adjacent to at least a portion of the stator end turns so that the cavity is at least partially defined by the end turn member, the stator assembly, and portions of the mold assembly.

The method may further comprise disposing at least one member aperture through a portion of the end turn member so that the first element can be disposed within the cavity via the at least one member aperture.

According to an aspect of the invention there is provided an electric machine module comprising a housing at least partially defining a machine cavity, an electric machine being positioned within the machine cavity and at least partially enclosed within the housing, the electric machine including a stator assembly further including stator end turns, an end turn member being positioned within the machine cavity and in thermal communication with at least a portion of the stator end turns and a portion of the housing, the end turn member including a radially inward flange and a radially outward flange axially extending from a central region, and the end turn member being configured and arranged so that the radially outward flange is substantially adjacent to an outer diameter of the stator end turns and the radially inner flange is substantially adjacent to an inner diameter of the stator end turns, and a transfer member being at least partially disposed between end turn member and the stator assembly so that at least a portion of the stator end turns are in contact with the transfer member, the transfer member being in thermal communication with at least a portion of the stator end turns and a portion of the end turn member, and the transfer member further comprising a first element contacting at least a portion of the stator end turns, the first element initially comprising at least one of a granular composition and a long-grain powder composition, and a second element contacting at least a portion of the first element and at least a portion of the stator end turns, the second element initially comprising a substantially liquid composition.

The first element may comprise at least one of aluminum oxide, aluminum nitride, boron nitride, and beryllium oxide.

The second element may comprise epoxy.

### DESCRIPTION OF THE DRAWINGS

FIG. 1 is a perspective view of an electric machine module according to one embodiment of the invention.

FIG. 2 is a perspective view of a stator assembly according to one embodiment of the invention.

FIG. 3 is front view of a stator lamination according to one embodiment of the invention.

FIG. 4 is a perspective view of a conductor according to one embodiment of the invention.

FIG. 5 is a partial cross-sectional view of portions of an electric machine module according to one embodiment of the invention.

FIGS. 6A and 6B are partial cross-sectional views of portions of an electric machine module according to one embodiments of the invention.

FIG. 7 is an isometric view of an end turn member according to one embodiment of the invention.

FIG. 8 is partial cross-sectional view of portions of an electric machine module according to one embodiment of the invention.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives that fall within the scope of embodiments of the invention.

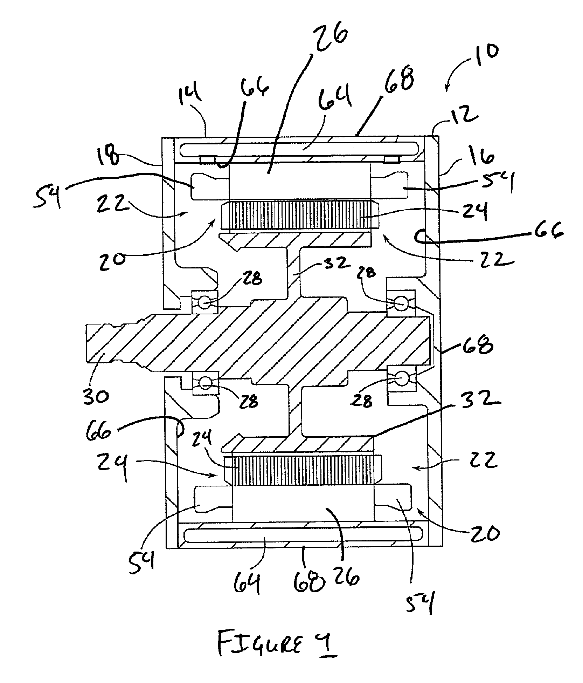

FIG. 1 illustrates an electric machine module 10 according to one embodiment of the invention. The module 10 can include a housing 12 comprising a sleeve member 14, a first end cap 16, and a second end cap 18. An electric machine 20 can be housed within a machine cavity 22 at least partially defined by the sleeve member 14 and the end caps 16, 18. For example, the sleeve member 14 and the end caps 16, 18 can be coupled via conventional fasteners (not shown), or another suitable coupling method, to enclose at least a portion of the electric machine 20 within the machine cavity 22. In some embodiments the housing 12 can comprise a substantially cylindrical canister and a single end cap (not shown). Further, in some embodiments, the module housing 12, including the sleeve member 14 and the end caps 16, 18, can comprise materials that can generally include thermally conductive properties, such as, but not limited to aluminum or other metals and materials capable of generally withstanding operating temperatures of the electric machine. In some embodiments, the housing 12 can be fabricated using different methods including casting, molding, extruding, and other similar manufacturing methods.

The electric machine 20 can include a rotor assembly 24, a stator assembly 26, and bearings 28, and can be disposed about a shaft 30. As shown in FIG. 1, the stator assembly 26 can substantially circumscribe at least a portion of the rotor assembly 24. In some embodiments, the rotor assembly 24 can also include a rotor hub 32 or can have a "hub-less" design (not shown).

In some embodiments, the electric machine 20 can be operatively coupled to the module housing 12. For example, the electric machine 20 can be fit within the housing 12. In some embodiments, the electric machine 20 can be fit within the housing 12 using an interference fit, a shrink fit, other similar friction-based fit that can at least partially operatively couple the machine 20 and the housing 12. For example, in some embodiments, the stator assembly 26 can be shrunk fit into the module housing 12. Further, in some embodiments, the fit can at least partially secure the stator assembly 26, and as a result, the electric machine 20, in both axial and circumferential directions. In some embodiments, during operation of the electric machine 20 the fit between the stator assembly 26 and the module housing 12 can at least partially serve to transfer torque from the stator assembly 26 to the module housing 12. In some embodiments, the fit can result in a generally greater amount of torque retained by the module 10.

The electric machine 20 can be, without limitation, an electric motor, such as a hybrid electric motor, an electric generator, or a vehicle alternator. In one embodiment, the electric machine 20 can be a High Voltage Hairpin (HVH) electric motor or an interior permanent magnet electric motor for hybrid vehicle applications.

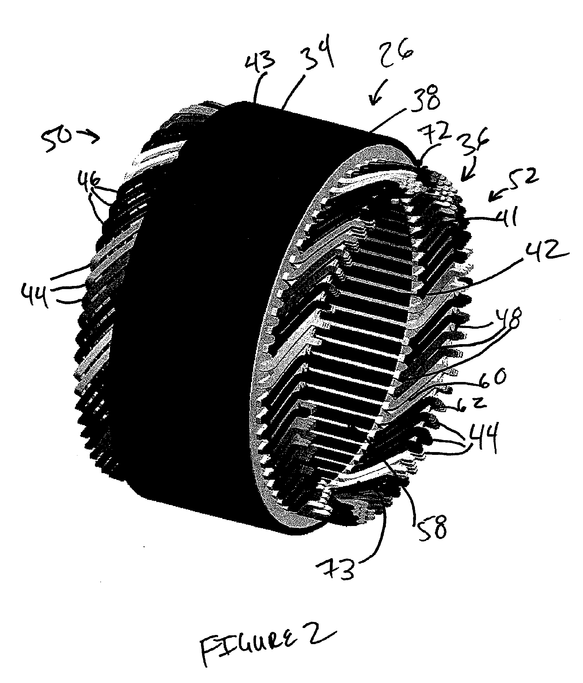

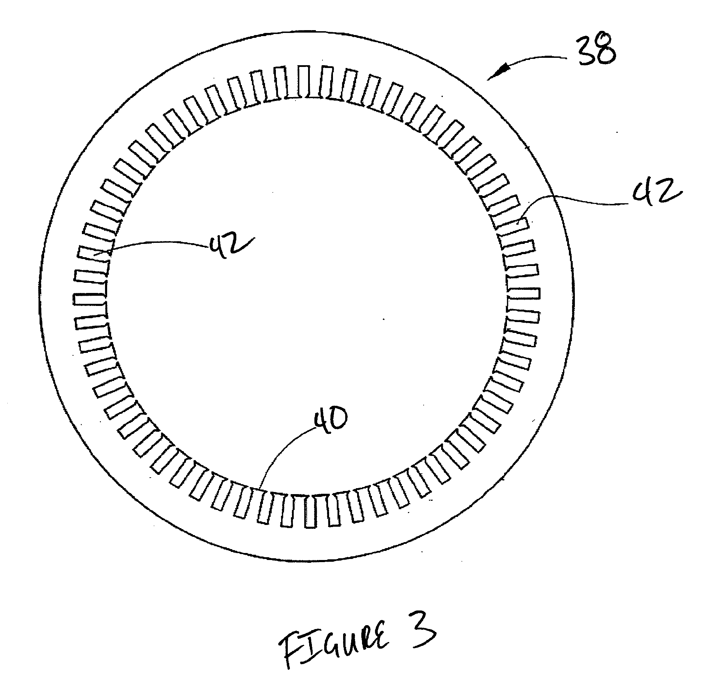

As shown in FIG. 2, in some embodiments, the stator assembly 26 can comprise a stator core 34 and a stator winding 36 at least partially disposed within a portion of the stator core 34. For example, in some embodiments, the stator core 34 can comprise a plurality of laminations 38. Referring to FIG. 3, in some embodiments, the laminations 38 can comprise a plurality of substantially radially-oriented teeth 40. In some embodiments, as shown in FIG. 2, when at least a portion of the plurality of laminations 38 are substantially assembled, the teeth 40 can substantially align to define a plurality of slots 42 that are configured and arranged to support at least a portion of the stator winding 36. As shown in FIG. 3, in some embodiments, the laminations 38 can include sixty teeth 40, and, as a result, the stator core 28 can include sixty slots 42. In other embodiments, the laminations 38 can include more or fewer teeth 40, and, accordingly, the stator core 34 can include more or fewer slots 42. Moreover, in some embodiments, the stator core 34 can comprise an inner perimeter 41 and an outer perimeter 43. For example, in some embodiments, the stator core 34 can comprise a substantially cylindrical configuration so that the inner and outer perimeters 41, 43 can comprise inner and outer diameters, respectively. However, in other embodiments, the stator core 34 can comprise other configurations (e.g., square, rectangular, elliptical, regular or irregular polygonal, etc.), and, as a result, the inner and outer perimeters 41, 43 can comprise other dimensions.

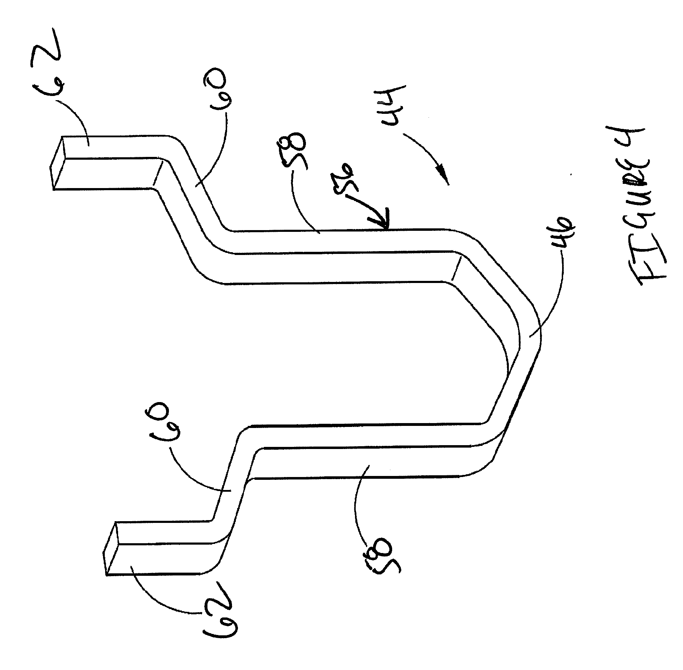

In some embodiments, the stator winding 36 can comprise a plurality of conductors 44. In some embodiments, the conductors 44 can comprise a substantially segmented configuration (e.g., a hairpin configuration), as shown in FIG. 4. For example, in some embodiments, at least a portion of the conductors 44 can include a turn portion 46 and at least two leg portions 48. In some embodiments, the turn portion 46 can be disposed between the two leg portions 48 to substantially connect the two leg portions 48. In some embodiments, the leg portions 48 can be substantially parallel. Moreover, in some embodiments, the turn portion 46 can comprise a substantially "u-shaped" configuration, although, in some embodiments, the turn portion 46 can comprise a v-shape, a wavy shape, a curved shape, and other shapes. Additionally, in some embodiments, as shown in FIG. 4, at least a portion of the conductors 44 can comprise a substantially rectangular cross section. In some embodiments, at least a portion of the conductors 44 can comprise other cross-sectional shapes, such as substantially circular, square, hemispherical, regular or irregular polygonal, etc. In some embodiments, the conductors 44 can comprise other configurations (e.g., substantially non-segment configuration).

In some embodiments, as shown in FIG. 2, at least a portion of the conductors 44 can be positioned substantially within the slots 42. For example, in some embodiments, the stator core 34 can be configured so that the plurality of slots 42 are substantially axially arranged. In some embodiments, the leg portions 48 can be inserted into the slots 42 so that at least some of the leg portions 48 can axially extend through the stator core 34. In some embodiments, the leg portions 48 can be inserted into neighboring slots 42. For example, in some embodiments, the leg portions 48 of a conductor 44 can be disposed in slots that are distanced approximately one magnetic-pole pitch apart (e.g., six slots, eight slots, etc.). In some embodiments, a plurality of conductors 44 can be disposed in the stator core 34 so that at least some of the turn portions 46 of the conductors 44 axially extend from the stator core 34 at a first axial end 50 of the stator core 34 and at least some of the leg portions 48 axially extend from the stator core 34 at a second axial end 52 of the stator core 34. In some embodiments, at least a portion of the conductor 44 regions that axially extend from the core 34 at the axial ends 50, 52 can comprise stator end turns 54.

In some embodiments, the conductors 44 are generally fabricated from a substantially linear conductor 44 that can be configured and arranged to a shape substantially similar to the conductor in FIG. 4. For example, in some embodiments, a machine (not shown) can apply a force (e.g., bend, push, pull, other otherwise actuate) to at least a portion of a conductor 44 to substantially form the turn portion 46 and the leg portions 48 of a single conductor 44.

In some embodiments, before, during, and/or after shaping of the conductors 44, a first insulation 56 can be applied to at least a portion the conductors 44. For example, in some embodiments, the first insulation 56 can comprise a resinous material such as an epoxy or an enamel that can be reversibly or irreversibly coupled to at least a portion of the conductors 44. In some embodiments, because an electrical current circulates through the conductors 44 during operation of the electric machine 20, the first insulation 56 can function, at least in part, to substantially prevent short circuits and/or grounding events between neighboring conductors 44 and/or conductors 44 and the stator core 34.

In some embodiments, at least some of the leg portions 48 can comprise multiple regions. In some embodiments, the leg portions 48 can comprise in-slot portions 58, angled portions 60, and connection portions 62. In some embodiments, as previously mentioned, the leg portions 48 can be disposed in the slots 42 and can axially extend from the first end 50 to the second end 52. In some embodiments, after insertion, at least a portion of the leg portions 48 positioned within the slots 42 can comprise the in-slot portions 58.

In some embodiments, at least some of stator end turns 54 extending from stator core 34 at the second axial end 52 can comprise the angled portions 60 and the connection portions 62. In some embodiments, after inserting the conductors 44 into the stator core 34, the leg portions 48 extending from the stator core 34 at the second axial end 52 can undergo a twisting process (not shown) which can lead to the creation of the angled portions 60 and the connection portions 62. For example, in some embodiments, the twisting process can produce the angled portions 60 at a more axially inward position and the connection portions 62 at a more axially outward position, as shown in FIGS. 2 and 4. In some embodiments, after the twisting process, the connection portions 62 of at least a portion of the conductors 44 can be immediately adjacent to connection portions 62 of other conductors 44. As a result, the connection portions 62 can be coupled together to form one or more stator windings 36. In some embodiments, the connection portions 62 can be coupled via welding, brazing, soldering, melting, adhesives, or other coupling methods. Additionally, in some embodiments, at least a portion of the first insulation 56 can be substantially removed at the connection portions 62 in order to enable the coupling process. Although, in some embodiments, the first insulation 56 can be applied to the conductors 44 so that it does not coat and/or cover the connection portions 62.

In some embodiments, some components of the electric machine 20 such as, but not limited to, the rotor assembly 24, the stator assembly 26, and the stator end turns 54, can generate heat during operation of the electric machine 20. These components can be cooled to increase the performance and the lifespan of the electric machine 20.

In some embodiments, dissipation of the heat energy at the stator end turns 54 can be insufficient to ensure efficient operations of the electric machine 20. For example, in some embodiments, heat energy can be produced by the stator end turns 54 as a result of current flowing through the end turns 54 during operation of the electric machine 20. Convection of the heat energy via air in the machine cavity 22 to the stator core 34 and/or the housing 12 can be substantially insufficient because air comprises relatively poor thermal conductivity properties. As a result, in some embodiments, because of insufficient convection of heat energy to the housing 12 and/or the stator core 34, the stator end turns 54 can exhibit relatively large copper losses, which can result in inefficient operation of the electric machine 20.

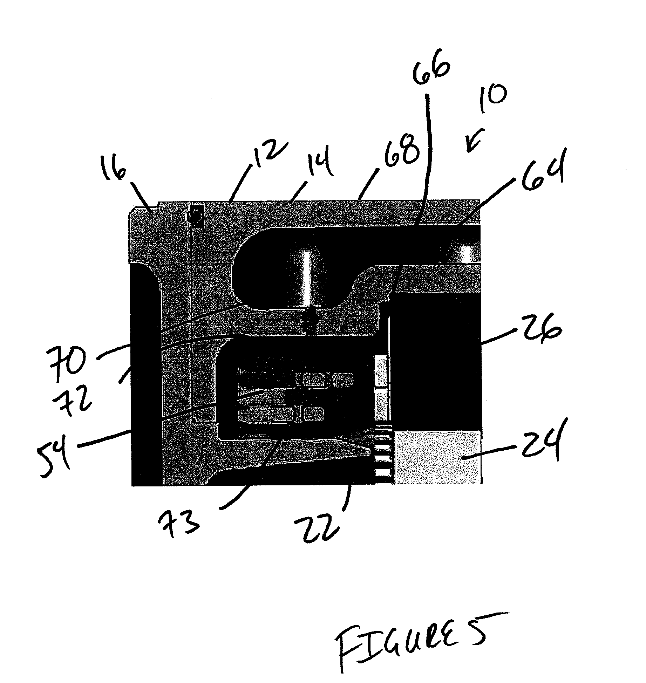

As shown in FIGS. 1 and 5, in some embodiments, the housing 12 can comprise a coolant jacket 64. In some embodiments, the housing 12 can include an inner wall 66 and an outer wall 68 and the coolant jacket 64 can be positioned substantially between at least a portion the walls 66, 68. For example, in some embodiments, the machine cavity 22 can be at least partially defined by the inner wall 66 (e.g., each of the elements of the housing 12 can comprise a portion of the inner wall 66). In some embodiments, the coolant jacket 64 can substantially circumscribe at least a portion of the electric machine 20. More specifically, in some embodiments, the coolant jacket 64 can substantially circumscribe at least a portion of an outer perimeter of the stator assembly 26, including the stator end turns 54.

Further, in some embodiments, the coolant jacket 64 can contain a coolant that can comprise transmission fluid, ethylene glycol, an ethylene glycol / water mixture, water, oil, motor oil, a gas, a mist, or a similar substance. The coolant jacket 64 can be in fluid communication with a coolant source (not shown) which can pressurize the coolant prior to or as it is being dispersed into the coolant jacket 64, so that the pressurized coolant can circulate through the coolant jacket 64.

In some embodiments, the coolant jacket 64 can comprise other configurations. In some embodiments, the coolant jacket 64 can comprise a substantially finned configuration (not shown). For example, in some embodiments, the coolant jacket 64 can comprise at least one fin extending from the outer wall 68 of the housing 12 so that the housing 12 comprises an increased surface area. As a result, as a fluid (e.g., air flow generated by a fan or natural movement) passes over and around the fin, at least a portion of the heat energy transferred to the housing can be convected to the local area. Moreover, in some embodiments, the housing 12 can comprise a plurality of fins to at least partially further increase surface area and heat energy transfer.

According to some embodiments of the invention, the coolant jacket 64 can include multiple configurations. In some embodiments, at least a portion of the coolant jacket 64 can extend through the sleeve member 14 a distance substantially similar to an axial length of the stator assembly 26. For example, in some embodiments, an axial length of a portion of the coolant jacket 64 can extend at least the same distance as the axial length of the stator assembly 64, including the stator end turns 54. In some embodiments, portions of the coolant jacket 64 can extend greater and lesser axial distances, as desired by manufacturers and/or end users for cooling.

In some embodiments, a portion of the coolant jacket 64 also can comprise at least one radially inward extension 70. For example, as shown in FIG. 5, in some embodiments, a region of the inner wall 66 can be substantially radially recessed so that the radially inward extension 70 of the coolant jacket 64 can be substantially adjacent to at least one set of the stator end turns 54. In some embodiments, the radially inward extensions 70 can be positioned adjacent to one of, both of, or neither of the sets of stator end turns 54. Further, in some embodiments, the coolant jacket 64 can comprise radially inward extensions 70 substantially continuously around at least a portion of an outer diameter of at least one of the stator end turns 54 (i.e., one continuous radially inward extension around a portion of at least one of the stator end turns 54). In other embodiments, the coolant jacket 64 can comprise substantially discrete radially inward extensions 70 positioned around and adjacent to at least a portion of an outer diameter 72 of at least one set of the stator end turns 54. In some embodiments, the housing 12 can comprise at least two radially inward extensions 70. For example, in some embodiments, the housing 12 can comprise two halves coupled together in a substantially axially central location so that each half of the housing 12 can comprise a radially inward extension 70 and the electric machine 20 can be positioned substantially between the two halves.

In some embodiments, the stator end turns 54 can comprise a generally lesser outer diameter 72 compared to the stator core 34, and, as a result, a greater distance can exist between the stator end turns 54 and the cooling jacket 64. In some embodiments, the radially inward extensions 70 of the coolant jacket 64 can enhance module 10 cooling because some of the coolant can circulate relatively closer to the stator end turns 54, compared to embodiments substantially lacking the radially inward extension 70. As a result, in some embodiments, a distance between the coolant and an area rejecting heat energy (i.e., the stator end turns 54) can be generally minimized, which can lead to generally increased heat energy transfer.

In some embodiments, the module 10 can comprise a transfer member 74. In some embodiments, the transfer member 74 can be positioned substantially adjacent to at least a portion of the stator end turns 54. In some embodiments, the transfer member 74 can contact and/or surround (e.g., encase, encompass, circumscribe, etc.) at least a portion of the stator end turns 54 on at least one axial side 50, 52 of the stator assembly 26. For example, in some embodiments, at least a portion of the stator end turns 54 on one of or both axial sides 50, 52 of the stator assembly 26 can be positioned substantially within (e.g., encompassed and/or encased) the transfer member 74. In some embodiments, the transfer member 74 can be in thermal communication with at least a portion of the stator end turns 54 and other elements of the module 10. For example, in some embodiments, the transfer member 74 can function to conduct at least a portion of the heat energy away from the stator end turns 54 toward other elements of the module 10, such as, but not limited to the housing 12 (e.g., the end caps 16, 18, the sleeve member 14, the canister, etc.).

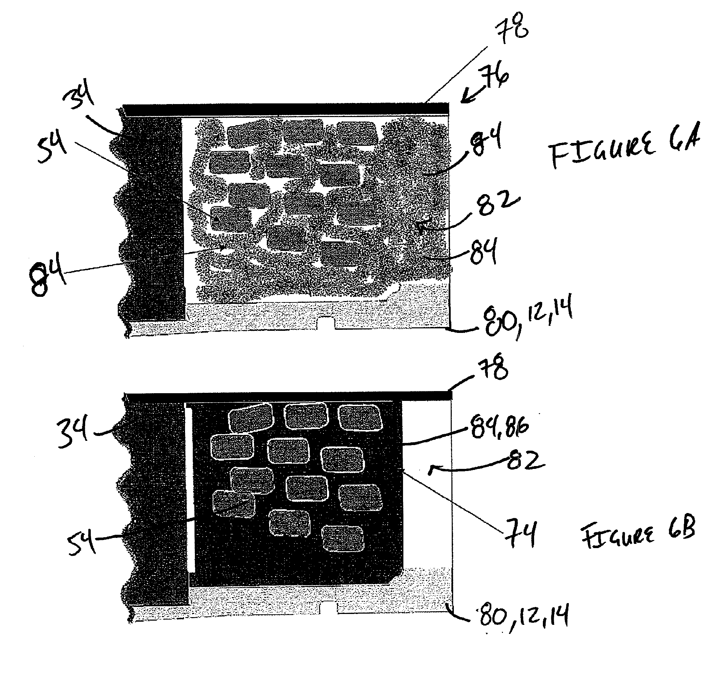

In some embodiments, the transfer member 74 can be positioned within the module 10 in different manners. In some embodiments, the transfer member 74 can be positioned with respect to the end turns 54 after positioning the conductors 44 through portions of the stator core 34. For example, in some embodiments, after positioning at least a portion of the conductors 44, the stator assembly 26 can be positioned within a mold assembly 76, as shown in FIGS. 6A and 6B. In some embodiments, the mold assembly 76 can comprise an inner portion 78 and an outer portion 80. In some embodiments, the outer portion 80 of the mold assembly 76 can be positioned immediately adjacent to the outer perimeter 43 of the stator core 34 and the inner portion 78 can be positioned immediately adjacent to the inner perimeter 41 of the stator core 34. For example, at least a portion of the surfaces of the outer portion 80 and the inner portion 78 can be substantially contiguous with the inner and outer perimeters 41,43 of the stator core 34.

Further, in some embodiments, portions of the mold assembly 76 can extend an axial distance as great as or greater than an axial distance of the stator assembly 26 (e.g., a distance from an axial outermost point of the stator end turns 54 at the first axial end 50 to an axial outermost point of the stator end turns 54 at the second axial end 52). In some embodiments, after positioning the mold assembly 76, the stator core 34 and the inner and outer portions 78, 80 can at least partially define a cavity 82 into which the end turns 54 extend from the stator core 34. In some embodiments, both axial sides 50, 52 of the stator assembly 26 can include a cavity 82 after positioning of the mold assembly 76. Moreover, in some embodiments, the cavities 82 can be positioned around a circumference of one of or both of the axial ends 50, 52 of the stator assembly 26.

In some embodiments, the transfer member 74 can be assembled in multiple elements. For example, in some embodiments, the transfer member 74 can include a first element 84. In some embodiments, the first element 84 can comprise aluminum oxide, aluminum nitride, boron nitride, beryllium oxide, and other similar compounds. In some embodiments, at least a portion of the previously mentioned compounds can comprise a thermal conductivity value as measured in Watts per meter Kelvin (W/(m*K)). For example, aluminum oxide can comprise a thermal conductivity value of approximately 33 W/(m*K), aluminum nitride can comprise a thermal conductivity value of approximately 117 W/(m*K), boron nitride can comprise a thermal conductivity value of approximately 55 W/(m*K), and beryllium oxide can comprise a thermal conductivity value of approximately 251 W/(m*K). In some embodiments, the first element 84 can comprise a powder, a long-grain powder composition, and/or a granulated form of at least some of the previously mentioned compounds.

In some embodiments, the first element 84 can be added to at least one of the cavities 82. For example, in some embodiments, the stator assembly 26 and the mold assembly 76 can be positioned so that at least one of the axial ends 50, 52 of the stator assembly 26 faces a generally upward direction. As a result, in some embodiments, at least one of the cavities 82 can be generally outward facing and open so that the first element 84 can be disposed in the cavity 82. By way of example only, in some embodiments, the first axial end 50 of the stator assembly 26 can be generally upward facing and, accordingly, the cavity 82 can be open to the surrounding environment. In other embodiments, initially, the second axial end 52 can be generally upward facing. In some embodiments, the first element 84 can be added to the cavity 82 so that the stator end turns 54 at the axial end 50 can be substantially encompassed by the first element 84. For example, in some embodiments, the cavity 82 circumferentially disposed around the stator end turns 54 can be substantially filled with the first element 84 so that at least a portion of the stator end turns 54 are substantially covered by the first element 84. By way of further example, in some embodiments, the first element 84 can be disposed within the cavity 82 so that the stator end turns 54 at one side of the stator assembly 26 are substantially covered by (e.g., disposed within) the first element 84.

In some embodiments, after disposing the first element 84 within at least a portion of one of the cavities 82, the stator assembly 26 and mold assembly 76, including the first element 84, can undergo a dynamic compaction process. In some embodiments, after adding the first element 84 to at least one of the cavities 82, the stator assembly 26 and the mold assembly 76 can be disposed on or within a dynamic compaction apparatus. For example, in some embodiments, the dynamic compaction apparatus can comprise a movement table (e.g., a shaker table, a rocker table, etc.).

In some embodiments, the movement table can move in one or more ways. For example, in some embodiments, the stator assembly 26 can be positioned on the movement table (e.g., coupled, secured, disposed, positioned within features configured and arranged to receive the stator assembly 26) and the movement table can rotate, move side-to-side, move forward and backward, any other movement in other directions, or any combination thereof. In some embodiments, as a result of the movement of the movement table, at least a portion of the first element 84 can be substantially compacted. For example, in some embodiments, as a result of the movement of the dynamic compaction apparatus, at least a portion of the first element 84 can settle (e.g., at least a portion of the air trapped within the first element 84 can be released due to the movement of the dynamic compaction apparatus, which can lead to movement of the first element 84).

In some embodiments, after the dynamic compaction process, further portions of the first element 84 can be disposed within the cavity 82. As previously mentioned, in some embodiments, the first element 84 can settle during and/or after the compaction process so that further portions of the first element 84 can be added to at least one of the cavities 82. For example, in some embodiments, before the dynamic compaction process, the first element 84 can substantially cover and/or encase at least a portion of the stator end turns 54. In some embodiments, as a result of the dynamic compaction process and the settling of the first element 84 within the cavity 82, at least a portion of the stator end turns 54 can be no longer covered and/or encased by the first element 84 after the dynamic compaction process. Accordingly, in some embodiments, after the dynamic compaction process, further portions of the first element 84 can be disposed in at least one of the cavities 82 so that at least a portion of the stator end turns 54 can be substantially covered and/or encased by the first element 84. Although, in some embodiments, even after the dynamic compaction process, the stator end turns 54 can continue to be substantially covered and/or encased by the first element 84. Furthermore, in some embodiments, the addition of the first element 84 and the dynamic compaction process can be repeated as many times as desired by the user and/or manufacturer.

In some embodiments, after sufficient levels of the first element 84 are present within at least one of the cavities 82, at least one cover (not shown) can be coupled to the mold assembly 76 and/or the stator assembly 26. For example, as previously mentioned, in some embodiments, the first element 84 can be initially disposed within the cavity 82 at the first axial end 50, and, accordingly the cover can be coupled to the mold assembly 76 and/or the stator assembly 26 adjacent to the first axial end 50. In some embodiments, the cover can be coupled via conventional fasteners, adhesives, interference fitting, snap fitting, or other coupling methods. In some embodiments, the cover can be reversibly coupled to the mold assembly 76 and/or the stator assembly 26 so that the cover can be removed at a later time, as described in further detail below.

In some embodiments, the cover can function to retain in position at least a portion of the first element 84. For example, in some embodiments, after coupling the cover to the mold assembly 76 and/or the stator assembly 26, the cover can function to keep the first element 84 within the cavity 82 so that the first element 84 can be further processed in downstream events, as described in further detail below. In some embodiments, although the cover can function to retain the first element 84, in some embodiments, the cover does not substantially seal the cavity 82 (e.g., air and other fluids can enter and exit the cavity 82 and contact the first element 84).

In some embodiments, after positioning the cover, further portions of the first element 84 can be disposed within the cavity on the other axial side of the stator assembly 26. In some embodiments, the stator assembly 26 and the mold assembly 76 can be substantially inverted so that further portions of the first element 84 can be positioned in the cavity 82 adjacent the other axial end of the stator assembly 26. By way of example only, in some embodiments, the cavity 82 at the first axial end 50 can be initially filled with the first element 84 and the cover can then be positioned and the stator assembly 26 can be inverted. In some embodiments, at least a portion of the previous steps can be repeated so that portions of the first element 84 can be disposed within the cavity 82 at the second axial end 52. In some embodiments, a cover (not shown) can be positioned to retain at least a portion of the first element 84 within the cavity 82 on the second axial side 52. As a result, in some embodiments, at least a portion of the first element 84 can be disposed within the cavities 82 and retained by the covers. Although previously mentioned as two separate covers coupled to the stator assembly 26 and/or the mold assembly 76, in some embodiments, a single cover and/or retaining member (not shown) can be configured and arranged to cover to both axial sides 50, 52. Moreover, in some embodiments, after disposing the first element 84 within one of the cavities 82, further portions of the first element 84 need not be added to the other cavity 82 before proceeding with the further steps detailed below (e.g., the first element 84 is disposed on only one of the axial sides 50, 52 of the stator assembly 26).

In some embodiments, after disposing at least a portion of the first element 84 within at least one of the cavities 82, the stator assembly 26 and the mold assembly 76, including the first element 84, can be mixed with a second element 86. In some embodiments, as described below, at least a portion of the first element 84 can contact the second element 86, which can lead to the first element 84 and the second element 86 combining and substantially solidifying around at least a portion of the stator end turns 54 to at least partially form the transfer member 74. For example, in some embodiments, the first element 84 and the second element 86 can substantially mix, and after proceeding through at least a portion of the following method, the transfer member 74 can be formed to function as previously mentioned.

In some embodiments, the second element 86 can comprise different compositions. In some embodiments, the second element 86 can comprise a varnish and/or a resin. In some embodiments, the second element 86 can comprise any resin-containing composition. For example, in some embodiments, the second element 86 can comprise an epoxy, although in other embodiments, the second element 86 can comprise any other resin-containing composition. In some embodiments, the second element 86 can comprise a fluid, a gas, a liquid, a mist, or any other compositional state.

In some embodiments, the second element 86 can be applied to the stator assembly 26 via any number of application processes. In some embodiments, the second element 86 can be applied to the stator assembly 26 using vacuum pressure impregnation. Although the following steps explain the vacuum pressure impregnation process for disposing the second element 86, this explanation is intended only as an example and is not intended to limit the scope of the invention. As previously mentioned, the second element 86 can be applied to the stator assembly 26 using any of a variety of different application processes.

In some embodiments, the impregnation process can comprise a plurality of steps. In some embodiments, the stator assembly 26 and the mold assembly 76, including at least one cover and the first element 84 in at least one cavity 82, can be positioned substantially within a processing tank (not shown). In some embodiments, the processing tank can be operatively coupled to a pressure source and can be configured and arranged to receive at least a portion of the stator assembly 26. In some embodiments, after positioning at least a portion of the stator assembly 26 within the processing tank, the tank can be substantially sealed and the pressure source can be activated so that a vacuum is generated within the processing tank (e.g., negative pressure can be provided to the processing tank). As a result, at least a portion of the air and other fluids present within the tank and the stator assembly 26 can be substantially removed from within the processing tank. In some embodiments, this vacuum step can last for any duration desired by the manufacturer to ensure sufficient removal of air and other fluids from the processing tank (e.g., 30, 60, 90, 120 minutes, etc.).

In some embodiments, the processing tank can be in fluid communication with a reservoir tank (not shown). In some embodiments, the reservoir tank can include a volume of the second element 86. In some embodiments, the reservoir tank can be configured to transfer a pre- determined volume of the second element 86 to the processing tank during and/or after the vacuum is created within the processing tank. For example, in some embodiments, after application of the vacuum, the reservoir tank can dispense at least a portion of the second element 86 to the processing tank.

In some embodiments, after at least a portion of the second element 86 is dispensed into the processing tank, the pressure source can introduce a pressure into the processing tank. For example, in some embodiments, the pressure within the processing tank can lead to at least a portion of the first element 84 to mix with at least a portion of the second element 86. As previously mentioned, the covers coupled to the stator assembly 26 and/or the mold assembly 76 can retain the first element 84 immediately adjacent to the end turns 54 and can allow air and other fluids to pass over, around, and/or through the covers. Accordingly, in some embodiments, the pressure provided by the pressure source can cause at least a portion of the second element 86 to contact multiple elements of the stator assembly 26, including the first element 84. In some embodiments, pressure can be applied within the processing tank for any duration (e.g., 30, 60, 90, 120 minutes, etc.) and at any pressure (80, 90, 100, 150 PSI, etc.) desired by the manufacturer to ensure that the second element 86 sufficiently contacts the various elements of the stator assembly 26.

In some embodiments, after sufficient time has elapsed, the processing tank can be vented so that only atmospheric pressure is present within the tank. Additionally, at least a portion of the second element 86 still within the processing tank (i.e., portions that are not on and/or within the stator assembly 26) can be drained to the reservoir tank. In some embodiments, the stator assembly 26 can be left within the processing tank to allow for excess second element 86 to drain from the stator assembly 26.

In some embodiments, the stator assembly 26, now comprising the second element 86 can be cured to harden the second element 86. For example, in some embodiments, after draining at least a portion of the second element 86 from the stator assembly 26, the stator assembly 26 can be heated to a temperature sufficient enough to cure the second element 86. In other embodiments, a curative agent can be applied to the stator assembly 26 to aid in curing second element 86.

In some embodiments, the combination of the first element 84 and the second element 86 can lead to formation of the transfer member 74. For example, in some embodiments, during the vacuum pressure impregnation process, the second element 86 can mix with, blend with, coat, and/or intercalate with the first element 84 so that after the curing process, the transfer member 74 can be substantially permanently retained so that it encompasses and/or encases at least a portion of the stator end turns 54. Moreover, in some embodiments, after curing and formation of the transfer member 74, the mold assembly 76 can be removed from the stator assembly 26 so that the transfer member 74 remains in substantially the same position (e.g., coating the end turns 54 at the first and second 50, 52 axial ends of the stator assembly 26). In some embodiments, at least a portion of the transfer member 74 can be shaped to a desired size (e.g., via sanding, shaving, molding, or any other processing) to be positioning within the housing 12 for use in transfer of heat energy, as previously mentioned.

Relative to some conventional electric machine modules, the transfer member 74 can at least partially enhance electric machine cooling via increased heat transfer. For example, some conventional electric machines include "potted" end turns. Briefly, for some conventional electric machines, portions of the end turns can be coated in a composition that includes some thermally conductive materials, such as aluminum oxide. For example, some potting compositions can comprise materials like silicone gels and/or room-temperature vulcanizing compounds that include thermally conductive materials to at least partially enhance thermal transfer capabilities of the potting compositions. However, the thermal conductivity of these potting compositions, even when enhanced with thermally conductive materials like aluminum oxide, are generally about 2.0 W/(m*K), while, in some embodiments, the thermal conductivity of the transfer member 74 can be greater than or equal to 2.0 W/(m*K).

Some embodiments of the invention can provide enhanced thermal transfer relative to at least some of the conventional electric machines. For example, because the first element 84 is disposed within the cavity 82 and can be substantially retained in place by the second element 86 to form the transfer member 74, the first element 84 can be substantially concentrated around the end turns 54, which, in some embodiments can lead to enhanced thermal transfer. In some embodiments, depending on the composition chosen as the first element 84, the thermal conductivity value can be between 15 - 125 times greater relative to the potting composition including a thermally conductive material.

In some embodiments, the difference in thermal conductivity can arise at least partially because of the increased relative concentration of the thermally conductive material around the end turns 54. For example, in some embodiments, because transfer member 74 largely comprises the first element 84 disposed substantially immediately adjacent to and/or encompassing of the stator end turns 54 (e.g., because of the dynamic compaction process and the vacuum pressure impregnation) with the second element 86 at least partially functioning to retain in position the first element 84, thermal transfer is enhanced because of the greater thermal conductivity values of at least some of the first element 84 compositions relative to the potting compositions of some conventional electric machines. Accordingly, in some embodiments, thermal transfer can be enhanced because of the greater concentration of the first element 84 within the transfer member 74.

In some embodiments, the module 10 can comprise different configurations for use with the transfer member 74. In some embodiments, at least a portion of the housing 12 can function in addition to and/or in place of at least a portion of the mold assembly 76. For example, as previously mentioned, in some embodiments, at least a portion of the stator assembly 26 can be positioned within the sleeve member 14. In some embodiments, the stator assembly 26 can be positioned within the sleeve member 14 so that the outer perimeter 43 of the stator core 34 is immediately adjacent to the sleeve member 14. As a result, in some embodiments, during the process of positioning the transfer member 74 within the cavities 82, at least a portion of the sleeve member 14 can function as the outer portion 80 of the mold assembly 76 and at least some of the previously mentioned steps can be repeated. Moreover, in some embodiments, by using the sleeve member 14 or any other portion of the housing 12 in the transfer member 74 formation process, the transfer member 74 can be contoured to the shape of the housing 12 during the formation process, which can lead to enhanced thermal transfer due to the increased surface area contact of portions of the housing 12 and transfer member 74.

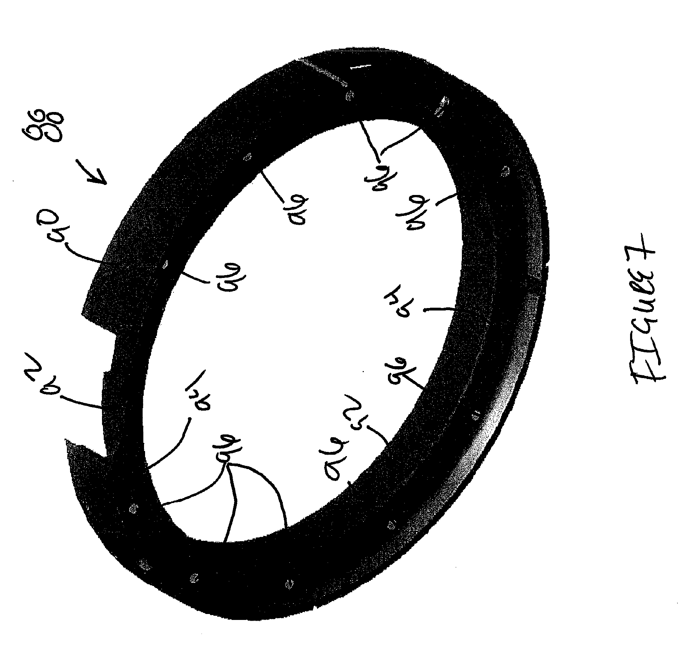

In some embodiments, the module 10 can comprise at least one end turn member 88 to aid in positioning of the transfer member 74 and to enhance module 10 operations. In some embodiments, the end turn member 88 can be substantially annular or ring shaped. In other embodiments, the end turn member 88 can comprise other shapes such as square, rectangular, regular and/or irregular polygonal, and other similar shapes. In some embodiments, the end turn member 88 can comprise a shape that is substantially similar to the general shape of the stator assembly 26, including the stator end turns 54. Moreover, in some embodiments, as shown in FIG. 7, the end turn member 88 can comprise a single structure, however, in other embodiments, the end turn member 88 can comprise multiple subunits coupled together. Further, in some embodiments, the end turn member 88 can comprise materials that can generally include thermally conductive properties, such as, but not limited to aluminum or other metals and materials capable of generally withstanding operating temperatures of the electric machine. In some embodiments, the end turn member 88 can be fabricated using different methods including casting, molding, extruding, and other similar manufacturing methods.

In some embodiments, at least a portion of the inner wall 66 of the housing 12 can comprise the end turn member 88. In some embodiments, the end turn member 88 can be coupled the inner wall 66 of one of the end caps 16, 18 and/or the sleeve member 14. For example, in some embodiments, the end turn member 88 can be interference fit, welded, brazed, or otherwise coupled to the inner wall 66 using coupling methods such as, but not limited to, conventional fasteners, adhesives, etc.

In some embodiments of the invention, the end turn member 88 can be substantially integral with the housing 12. In some embodiments, the housing 12 can be fabricated so that the end turn member 88 extends from the inner wall 66 of the housing 12. For example, in some embodiments, the end turn member 88 can be fabricated (e.g., casting, molding, extruding, etc.) as a portion of the housing 12 so that the elements are formed at substantially the same time and are substantially one element. As an additional example, in some embodiments, the end turn member 88 can be substantially integral with at least one of the end caps 16, 18 and/or the sleeve member 14 so that upon coupling together the end caps 16, 18 and the sleeve member 14, as previously mentioned, the end turn member 88 can be positioned substantially adjacent to the stator assembly 26. Although future references may suggest a non-integral end turn member 88, those references are in no way intended to exclude embodiments comprising a substantially integral end turn member 88 and elements of a substantially integral end turn member 88.

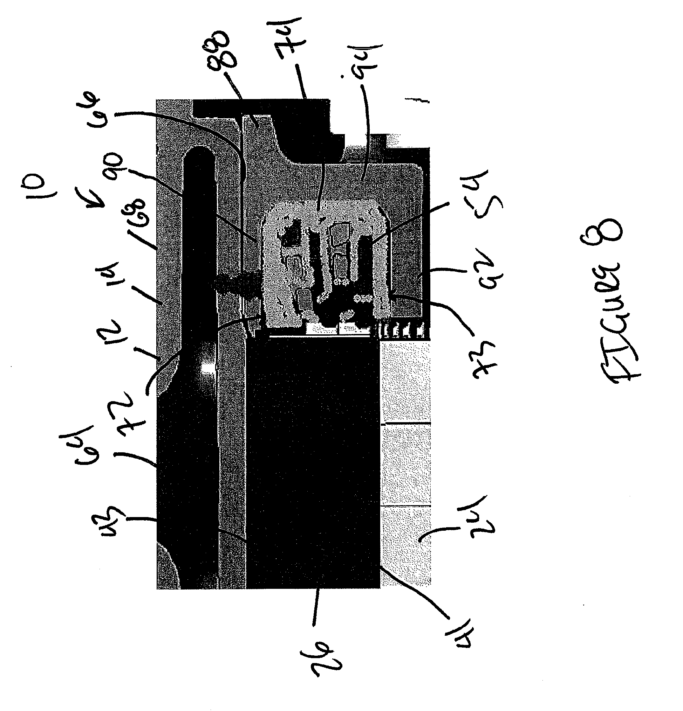

In some embodiments, the end turn member 88 can comprise a radially outer flange 90, a radially inner flange 92, and a central region 94. As shown in FIGS. 7 and 8, in some embodiments, the end turn member 88 can be formed so that the flanges 90, 92 axially extend into the machine cavity 22 from the central region 94 (e.g., the end turn member 88 can comprise a sideways-oriented "u" shape). In some embodiments, the end turn member 88 can be formed (e.g., cast, molded, machined, etc.) so that the radially outer flange 90 and the radially inner flange 92 can axially extend from the central region 94 so that at least a portion of the stator end turns 54 can be received within the end turn member 88. For example, in some embodiments, when the end turn member 88 is positioned substantially adjacent to the stator assembly 26, the radially outer flange 90 can be substantially adjacent to the outer diameter 72 of the stator end turns 54. Moreover, in some embodiments, the stator end turns 54 can comprise an inner diameter 73. In some embodiments, the radially inner flange 92 can be substantially adjacent to the inner diameter 73 of the stator end turns 54, as shown in FIG. 8. Accordingly, in some embodiments, the central region 94 can be substantially adjacent to an axial outermost portion of at least a portion of the stator end turns 54.

As a result of the substantially adjacent spatial relationship of the end turn member 88 and the stator end turns 54, in some embodiments, the end turn member 88 can at least partially enhance heat energy transfer without the transfer member 74. In some embodiments, the end turn member 88 can comprise a substantially thermally conductive material (e.g., aluminum), as previously mentioned. As a result, because portions of the end turn member 88 can be substantially adjacent to portions of the end turns 54 and in thermal communication with at least a portion of the end turns 54, the end turn member 88 can receive at least a portion of the heat energy produced by the end turns 54 during electric machine 20 operations. Moreover, as previously mentioned, in some embodiments, the end turn member 88 can be immediately adjacent to the inner wall 66 of the housing 12 (e.g., friction fit, interference fit, substantially integral, etc.), which can lead to enhance heat energy transfer from the end turns 54 to the housing 12 via the end turn member 88 comprising thermally conductive materials.

Furthermore, in some embodiments, the end turn member 88 can conduct at least a portion of the heat energy received from the stator end turns 54 to the housing 12. In some embodiments, because the end turn member 88 can be integral with and/or coupled to the housing 12, the end turn member 88 can transfer at least a portion of the heat energy to the housing 12, which can transfer the heat energy to the surrounding environment via convection. Additionally, in some embodiments, the housing 12 and/or the end turn member 88 can conduct at least a portion of the heat energy into the coolant circulating through the coolant jacket 64.

In some embodiments, the end turn member 88 can be used to position the transfer member 74. By way of example only, in some embodiments, at least a portion of the stator assembly 26 can be positioned substantially within the housing 12 so that the outer perimeter 43 of the stator assembly 26 is immediately adjacent to the housing 12. Also, the inner perimeter 41 of the stator assembly 26 can be positioned immediately adjacent to the inner portion 78 of the mold assembly 76, as previously mentioned. In some embodiments, the end turn member 88 can be positioned within the cavity 82 defined by the housing 12 and the mold assembly 76. For example, in some embodiments, the outer flange 90 can be positioned substantially between the outer diameter 72 of the stator end turns 54 and at least a portion of the housing 12 and the inner flange 92 can be positioned substantially between the inner diameter 73 of the stator end turns 54 and the inner portion 74 of the mold assembly 76. As a result, in some embodiments, the cavity 82 on at least one axial side 50, 52 of the stator assembly 26 can be substantially defined, at least in part, by the flanges 90, 92 and the central region 94.

In some embodiments, the end turn member 88 can comprise at least one member aperture 96 for use in positioning of the transfer member 74. For example, as shown in FIG. 7, in some embodiments, the end turn member 88 can comprise a plurality of member apertures 96 disposed through at least a portion of the central region 94. Moreover, in some embodiments, at least a portion of the member apertures 96 can be generally axially directed. In some embodiments, the member apertures 96 can be, at least partially, circumferentially arranged with respect to the end turn member 88. For example, in some embodiments, the member apertures 96 can be arranged in regular circumferential patterns (e.g., an aperture 96 positioned every 30 degrees) or irregular circumferential patterns. As a result, in some embodiments, at least a portion of the first element 84 can be disposed in at least one of the cavities 82 via at least a portion of the member apertures 96. For example, in some embodiments, the first element 84 can be disposed through at least some of the member apertures 96 to fill at least a portion of at least one of the cavities 82 to encompass and/or encase at least a portion of the end turns 54 extending into the cavity 82.

Moreover, because of the presence of the central region 94, in some embodiments, the cavity 82 can be covered without need for a separate cover, as previously mentioned. For example, in some embodiments, after disposing at least a portion of the first element 84 within at least one of the cavities 82 via some of the member apertures 96, the stator assembly 26 can undergo the dynamic compaction process and further portions of the first element 84 can be disposed within the cavity 82 via the member apertures 96 until a volume of first element 84 desired by the manufacturer is reached. Furthermore, in some embodiments, at least a portion of the member apertures 96 can be at least partially sealed (e.g. "capped-off') with a sealing structure (not shown) so that the first element 84 does not flow through the member apertures 96 during the vacuum pressure impregnation process. In some embodiments, similar to the cover as previously mentioned, the sealing structures can function to retain a substantial portion of the first element 84 but can allow fluid flow (e.g., air, a portion of the second element 86, etc.) into and/or out of at least one of the cavities 82.

In some embodiments comprising at least one end turn member 88, the functionality of the transfer member 74 can be at least partially enhanced. For example, in some embodiments, because the end turn member 88 can remain substantially coupled to and/or integral with the housing 12 after formation of the transfer member 74, the transfer member 74 can remain in close contact with the end turn member 88 during module 10 operations. As a result, in some embodiments, because of the contact between the end turn member 88 and the transfer member 74 in combination with the enhanced thermal conductivity values of the transfer member 74, at least a portion of the heat energy produced by some elements of the electric machine 20 (e.g., the stator end turns 54, the rotor assembly 24, the stator assembly 26, etc.) can be transferred via conduction from the transfer member 74 to the end turn member 88 and/or the housing 12, which can transfer the heat energy to other elements of the module 10. For example, in some embodiments, the transfer member 74 can aid in thermal transfer to the end turn member 88, the housing 12, coolant circulating through the coolant jacket 64, etc. Moreover, in some embodiments, the housing 12 can transfer at least a portion of the heat energy to the surrounding environment via convection and/or transfer at least a portion of the heat energy to the coolant circulating through the coolant jacket 64 via conduction.

In some embodiments, the transfer member 74 can be disposed immediately adjacent to at least a portion of the stator end turns 54 using multiple combinations of some of the previously mentioned elements. For example, in some embodiments, the end turn member 88 can be employed on one axial end of the stator assembly 26 (i.e., either the first or the second axial end 50, 52) and the mold assembly 76 and/or the housing 12 and a cover combination can be employed on the other axial end of the stator assembly 76 to disposed the transfer member 74. Moreover, in some embodiments, the transfer member 74 can be disposed on either axial side 50, 52 of the stator assembly 26 using the end turn member 88 or the mold assembly 76 and/or the housing 12 and a cover. The above examples are not intended to limit the possible combinations that can be employed to provide the transfer member 74 in thermal communication with at least a portion of the stator end turns 54. Any other combinations of the mold assembly 76, the housing 12, and/or the end turn member 88 can be used to aid in disposing the transfer member 74 in thermal communication with at least a portion of the stator end turns 54.

In some embodiments, at least a portion of the member apertures 96 can function as expansion joints. In some embodiments comprising a transfer member 74, the member apertures 96 can function to account for transfer member 74 expansion. For example, during operation of the electric machine 20, the production of heat energy by at least a portion of the stator end turns 54 can cause thermal expansion of the transfer member 74. As a result of the thermal expansion of the transfer member 74, in some embodiments, a force and/or pressure can be applied to at least a portion of the stator end turns 54, the flanges 90, 92 and/or the central region 94, which can lead to damage to the end turn member 88 and/or the stator end turns 54.

In some embodiments, the member apertures 96 can function to at least partially relieve the pressure associated with the thermal expansion of the transfer member 74. For example, in some embodiments, when the transfer member 74 expands, at least a portion of the transfer member 74 (e.g., the first element 84 and/or the second element 86) can expand into and/or through the member aperture 96. As a result, in some embodiments, the force and/or pressure exerted upon at least some of the stator end turns 54 can be at least partially relieved by the member apertures 96, which can at least partially reduce the risk of damage to the stator end turns 54 and/or end turn member 88 stemming from potting composition thermal expansion.

It will be appreciated by those skilled in the art that while the invention has been described above in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the invention are set forth in the following claims.

## Claims

1. An electric machine module comprising:
a housing at least partially defining a machine cavity;
a coolant jacket being at least partially positioned within the housing;
a stator assembly being positioned within the machine cavity and being at least partially enclosed within the housing, the stator assembly including
a stator core including a first and a second axial end, and
stator end turns extending from the first and the second axial ends into the machine cavity; and
a transfer member substantially contacting at least a portion of the stator end turns, the transfer member being in thermal communication with at least a portion of the stator end turns and at least a portion of the housing, the transfer member further comprising
a first element being positioned immediately adjacent to at least a portion of the stator end turns, the first element comprising a substantially non-liquid composition when the first element is positioned immediately adjacent to at least a portion of the stator end turns, and
a second element being positioned substantially adjacent to at least a portion of the first element and at least a portion of the stator end turns, the second element comprising a substantially liquid composition when the second element is positioned substantially adjacent to at least a portion of the first element and at least a portion of the stator end turns.

2. The electric machine module of claim 1, wherein the first element comprises at least one of aluminum oxide, aluminum nitride, boron nitride, and beryllium oxide.

3. The electric machine module of claim 1, wherein the first element comprises a composition including a thermal conductivity value greater than or equal to 30 Watts per meter Kelvin.

4. The electric machine module of claim 1, wherein the second element comprises a resin; or
wherein the second element comprises epoxy.

5. The electric machine module of claim 1 and further comprising an end turn member being at least partially positioned within the machine cavity and substantially adjacent to at least a portion of the stator end turns.

6. The electric machine module of claim 5, wherein at least a portion of the transfer member is in thermal communication with at least a portion of the end turn member; wherein optionally
the electric machine module further comprises at least one member aperture disposed through a portion of the end turn member.

7. The electric machine module of claim 1, wherein the transfer member comprises a composition including a thermal conductivity value greater than or equal to 2 Watts per meter Kelvin.

8. A method of assembling an electric machine module, the method comprising:
providing an electric machine including a stator assembly, the stator assembly including stator end turns, an inner perimeter, and an outer perimeter;
positioning an inner portion of a mold assembly immediately adjacent to the Inner perimeter of the stator assembly;
positioning an outer portion of the mold assembly immediately adjacent to the outer perimeter of the stator assembly so that the inner portion, the outer portion, and at least a portion of the stator assembly at least partially define a cavity, wherein at least a portion of the stator end turns extend from stator assembly into the cavity;
disposing at least a portion of a first element within the cavity until at least a portion of the stator end turns are substantially surrounded by the first element;
dynamically compacting at least a portion of the first element within the cavity;
and
impregnating at least a portion of the stator assembly and the cavity with a second element so that the second element contacts at least a portion of the first element to form a transfer member.

9. The method of claim 8, wherein the first element comprises a substantially non-liquid composition when disposed within the cavity.

10. The method of claim 8, wherein the first element comprises at least one of aluminum oxide, aluminum nitride, boron nitride, and beryllium oxide.

11. The method of claim 8, wherein impregnating step comprises vacuum pressure impregnation.

12. The method of claim 8, wherein the second element comprises a resin; or
wherein the second element comprises epoxy.

13. The method of claim 8 and further comprising positioning an end turn member substantially adjacent to at least a portion of the stator end turns so that the cavity is at least partially defined by the end turn member, the stator assembly, and portions of the mold assembly; wherein optionally
the method further comprises disposing at least one member aperture through a portion of the end turn member so that the first element can be disposed within the cavity via the at least one member aperture.

14. An electric machine module comprising:
a housing at least partially defining a machine cavity;
an electric machine being positioned within the machine cavity and at least partially enclosed within the housing, the electric machine including a stator assembly further including stator end turns;
an end turn member being positioned within the machine cavity and in thermal communication with at least a portion of the stator end turns and a portion of the housing,
the end turn member including a radially inward flange and a radially outward flange axially extending from a central region, and
the end turn member being configured and arranged so that the radially outward flange is substantially adjacent to an outer diameter of the stator end turns and the radially inner flange is substantially adjacent to an inner diameter of the stator end turns; and
a transfer member being at least partially disposed between end turn member and the stator assembly so that at least a portion of the stator end turns are in contact with the transfer member, the transfer member being in thermal communication with at least a portion of the stator end turns and a portion of the end turn member, and the transfer member further comprising
a first element contacting at least a portion of the stator end turns, the first element initially comprising at least one of a granular composition and a long-grain powder composition, and
a second element contacting at least a portion of the first element and at least a portion of the stator end turns, the second element initially comprising a substantially liquid composition.

15. The electric machine module of claim 14, wherein the first element comprises at least one of aluminum oxide, aluminum nitride, boron nitride, and beryllium oxide; and/or
wherein the second element comprises epoxy.
